# FASCICULE DE BREVET EUROPEEN

(11) **EP 1 566 064 B1**
(45) Date de publication et mention de la délivrance du brevet: **08.04.2009**
(21) Numéro de dépôt: 03786029.3
(22) Date de dépôt: 19.11.2003
(51) Int. Cl.: H04W 48/18, H04L 12/56

(54) **SYSTEME ET PROCEDE DE SELECTION D'UN RESEAU DE COMMUNICATION PAR UN TERMINAL**
SYSTEM UND VERFAHREN ZUR AUSWAHL EINES KOMMUNIKATIONSNETZWERKS DURCH EINEM ENDGERÄT
SYSTEM AND METHOD FOR SELECTION OF A COMMUNICATION NETWORK BY A TERMINAL

(30) Priorité: 29.11.2002 FR 0215101
(43) Date de publication de la demande: 24.08.2005
(73) Titulaire: Orange France, 94745 Arcueil Cedex (FR)
(72) Inventeur: ANNIC, Etienne, F-78120 Rambouillet (FR)
(74) Mandataire: de la Fouchardière, Marie-Noëlle
(86) Numéro de dépôt international: PCT/FR2003/003430
(87) Numéro de publication internationale: WO 2004/052032

(56) Documents cités:
- WO-A-00/67435
- WO-A-01/28160
- WO-A-02/01822
- WO-A-02/09451
- WO-A-02/30056
- WO-A-03/107601
- US-A1- 2002 006 780
- BILGIC M ET AL: "Quality of service in general packet radio service" MOBILE MULTIMEDIA COMMUNICATIONS, 1999. (MOMUC '99). 1999 IEEE INTERNATIONAL WORKSHOP ON SAN DIEGO, CA, USA 15-17 NOV. 1999, PISCATAWAY, NJ, USA,IEEE, US, 15 novembre 1999 (1999-11-15), pages 226-231, XP010370727 ISBN: 0-7803-5904-6

## Description

La présente invention concerne un système et un procédé de sélection dans un terminal pour une architecture dédiée à un réseau de communication.

L'invention s'applique plus particulièrement à la sélection de l'accès à un réseau de communication parmi un ensemble de réseaux de communication, offrant chacun un ensemble de services, par l'intermédiaire d'une architecture dédiée intégrée à un terminal, relié à un réseau mobile public auquel l'utilisateur est abonné.

Actuellement, ces services sont accessibles à partir d'un terminal raccordé aux réseaux de télécommunications mobiles, tel que le système GPRS (General Packet Radio Service, soit service général de radiocommunication en mode paquet) ou le système UMTS (Universal Mobile Telecommunications System, soit système universel de télécommunications avec les mobiles).

Dans ces dits réseaux mobiles, pour sélectionner un réseau de communication offrant des services, il faut sélectionner un nom identifiant ledit réseau de communication. Pour établir une connexion entre un terminal et un réseau de communication déterminé, ledit nom identifiant est transmis à travers un équipement de support de service du réseau mobile vers un équipement de gestion d'accès aux dits réseaux de communication. Ledit nom identifiant, en provenance du terminal, permet audit équipement de support de service du réseau mobile de déterminer l'équipement de gestion d'accès offrant l'accès au réseau de communication et associé audit nom identifiant.

Dans les réseaux actuels de type GPRS ainsi que UMTS, le nom identifiant un réseau de communication est appelé un APN (Access Point Name, soit nom de point d'accès). Dans ces mêmes systèmes, l'équipement de support de service est appelé un SGSN (Serving GPRS Support Node, soit noeud de support de service GPRS) et l'équipement de gestion d'accès aux différents réseaux de communication est appelé GGSN (Gateway GPRS Service Node, soit noeud de service GPRS de transit).

Un nom identifiant APN comprend principalement un identifiant correspondant au réseau de communication sélectionné, un identifiant de l'opérateur qui gère ledit réseau de communication et un identifiant du la technologie du réseau mobile, par exemple GPRS. Le format, ainsi que l'usage, d'un nom identifiant APN sont normalisés par l'ETSI (European Telecommunications Standards Institute, soit Institut européen de normalisation des télécommunications).

Entre autre fonction, un équipement de support de service SGSN reçoit d'un terminal un nom identifiant APN et le transmet pour reconnaissance au serveur de nom identifiant APN auquel il est raccordé. Ledit serveur de nom identifiant APN répond à l'équipement de support de service SGSN en transmettant la liste des équipements de gestion d'accès GGSN associés au nom identifiant APN Entre autre fonction, ledit équipement de support de service SGSN établit une connexion vers un équipement de gestion d'accès GGSN appartenant à ladite liste. Ledit équipement de gestion d'accès GGSN établit la connexion vers un réseau de communication correspondant au nom identifiant APN. Ces équipements SGSN et GGSN sont également normalisés par l'ETSI.

Pour accéder à un réseau de communication offrant un ensemble de services, l'utilisateur sélectionne un nom identifiant APN sur le terminal, de manière à établir la connexion avec le réseau de communication correspondant.

Une fois un nom identifiant APN sélectionné sur le terminal, un protocole d'accès démarre. En GPRS ou en UMTS, ce protocole est appelé "PDP" (Packet Data Protocol, soit protocole de données en mode paquet). Une procédure d'établissement de la connexion du terminal vers l'équipement de gestion d'accès dit GGSN est mise en oeuvre. Pour permettre l'établissement de la connexion, un lien est créé à travers le réseau mobile vers le réseau de communication sélectionné. En GPRS ou en UMTS, ce lien est appelé "PDP Context". Ce lien permet l'accès du terminal à l'ensemble des services dudit réseau de communication.

A la fin de ladite procédure, le terminal reçoit une adresse en provenance du réseau de communication, avec lequel la connexion est établie. Cette adresse identifie ledit terminal au sein dudit réseau de communication. Elle est associée audit lien appelé "PDP Context", existant entre le terminal et ledit réseau de communication.

La norme de l'ETSI prévoit que plusieurs connexions peuvent être établies simultanément vers différents réseaux de communication à partir d'un même terminal. Le document WO 03/107 601 A (état de la technique selon l'article 54(3) CBE) décrit l'utilisation d'un gestionnaire d'architectures dédiées dans un terminal pour gérer l'accès simultané à plusieurs réseaux de communication.

Dans ledit document, à l'établissement de la connexion vers un réseau de communication, le gestionnaire d'architectures dédiées dialogue avec ledit réseau de communication. Dans le terminal, le gestionnaire d'architectures dédiées désigne une architecture dédiée qui est consacrée à la connexion audit réseau de communication. A l'établissement de chaque nouvelle connexion vers un nouveau réseau de communication, le gestionnaire d'architectures dédiées désigne une architecture différente, dédiée à la connexion audit nouveau réseau de communication. Dans un même terminal, les différentes architectures dédiées fonctionnent simultanément. Chaque architecture dédiée, associée chacune à un lien appelé "PDP Context", donne accès à un réseau de communication différent.

Ledit document mentionne que chaque architecture dédiée comprend une interface réseau. Chaque réseau de communication communique avec une architecture dédiée dudit terminal par l'intermédiaire d'une interface réseau séparée. L'adresse transmise par chacun des réseaux de communication est reçue par ledit gestionnaire d'architectures dédiées et paramétrée sur une interface réseau. Une interface réseau d'une architecture dédiée est sans rapport avec une autre interface réseau d'une autre architecture dédiée.

Dans un terminal, chaque architecture dédiée est affectée à un réseau de communication par ledit gestionnaire d'architectures dédiées. L'autonomie et le fonctionnement indépendant des architectures dédiées dudit terminal garantissent la confidentialité et la sécurité entre les réseaux de communication, en assurant une étanchéité entre les différents services connectés audit terminal.

De manière à maintenir effectivement l'indépendance entre les différents réseaux de communication, un dispositif d'architecture dédiée ne possède pas les fonctionnalités permettant la gestion du lien "PDP Context", associé à ladite architecture dédiée et crée à travers le réseau mobile pour permettre l'accès du terminal à un réseau de communication.

De plus, du fait de l'autonomie entre les différentes architectures dédiées d'un terminal, chaque architecture dédiée n'a aucune vision du fonctionnement des autres architectures dédiées duit terminal.

Le document WO 02/30056 décrit un système de gestion de la qualité de service après l'accès d'un terminal mobile à un réseau privé. Par cet unique réseau privé, le terminal mobile accède à différentes applications par l'intermédiaire d'une passerelle (ou gateway). La station de base, associée au terminal mobile, identifie la qualité de service utile pour chacune des applications correspondant aux différents paquets de données IP (Internet protocol) transmis sur le réseau privé. Ce document ne présente d'aucune façon une sélection pour l'accès et la gestion dans le terminal à un ensemble de réseau de communication.

Le document WO 02/01822 présente une méthode de sécurisation de l'accès à distance à un réseau privé de transmission de données en environnement IP (Internet Protocol), utilisant les fonctions d'un serveur d'accès distant (Remote Access Server, NAS) avec des fonctionnalités GPRS. Les procédures de gestion d'un lien "PDP Context", décrites dans les normes ETSI et 3GPP, permettent d'assurer la connectivité GPRS (accès distant et sécurité) et l'utilisation des ressources radio du réseau GPRS. Ce document ne précise pas la manière de gérer et de sélectionner dans un terminal l'accès à distance avec plusieurs réseaux.

Le document WO 02 09451 concerne une méthode de connexion d'une pluralité de dispositifs TE par l'intermédiaire d'un terminal mobile MT vers un unique réseau de données paquets PDN. Comme le terminal mobile MT ne reçoit les adresses IP, affectées à chaque dispositif TE, que d'un seul réseau de données PDN, lesdites adresses sont toujours différentes les unes des autres. Par conséquent, le document cité ne rencontre pas le problème posé par l'invention, c'est-à-dire sélectionner sur un terminal le fonctionnement d'une pluralité de dispositifs d'architectures dédiées chacune à un réseau différent de communication.

Aussi, le problème technique à résoudre par l'objet de la présente invention est de proposer un système et un procédé de sélection dans un terminal pour un ensemble de dispositifs d'architectures dédiées à des réseaux de communication, ledit terminal incluant au moins une interface utilisateur, qui permettrait de remédier aux inconvénients des systèmes existants en sélectionnant et en gérant les différentes architectures dédiées d'un même terminal connecté simultanément à plusieurs réseaux de communication.

La solution au problème technique posé consiste, selon la présente invention, en ce que, la connexion auxdits réseaux de communication étant établie par l'intermédiaire de liens appelés "PDP Context" via un réseau mobile vers lesdits réseaux de communication, ledit système comprend au moins un moyen de sélection, intégré dans ladite interface utilisateur dudit terminal, permettant de commander au moins un accès à au moins un gestionnaire d'architectures dédiées, intégré audit terminal pour faire le choix du nom identifiant un desdits réseaux de communication, et pour gérer un desdits dispositifs d'architecture dédiée audit réseau de communication sélectionné et permettant de raccorder ledit gestionnaire d'architectures dédiées audit lien appelé "PDP Context" pour traiter au moins un état dudit lien vers ledit réseau de communication sélectionné et adapter au moins une ressource audit réseau de communication sélectionné.

Le gestionnaire d'architectures dédiées dru terminal gère le fonctionnement simultané des différentes architectures dédiées aux différents réseaux de communication, auxquels ledit terminal est connecté.

Le moyen de sélection permet d'accéder audit gestionnaire d'architectures dédiées, celui-ci commandant une des architectures dédiées qu'il gère, en fonction de la sélection réalisée.

De cette façon, chacune des architectures dédiées dudit terminal ne communique qu'avec un seul réseau de communication, associée au lien PDP Context correspondant, même lorsque ledit terminal est connecté avec plusieurs réseaux de communication.

Le gestionnaire d'architectures dédiées est prévu pour gérer au moins un dispositif d'architecture dédiée à un réseau de communication et pour traiter simultanément le fonctionnement desdites architectures dédiées dudit terminal connecté avec plusieurs desdits réseaux de communication.

Le fonctionnement distinct et autonome des différentes architectures dédiées du terminal est donc préservé, ce qui garanti la confidentialité et la sécurité entre les différents réseaux de communication auxquels ledit terminal est connecté. Ces impératifs se font par exemple particulièrement sentir lors d'une transaction bancaire ou bien lors du raccordement à un réseau privé d'entreprise.

Selon l'invention, ledit moyen de sélection est intégré dans ladite interface utilisateur dudit terminal.

L'interface utilisateur dudit terminal, par exemple un moyen d'affichage ou un moyen d'écoute sonore ou un moyen de transmission d'un signal vocal ou bien un moyen de lecture en braille, permet l'accès aux services correspondant à un réseau de communication.

L'utilisateur du terminal active ledit moyen de sélection pour commander ledit gestionnaire d'architectures dédiées.

Ledit moyen de sélection est de toute forme et de toute nature s'adaptant aux technologies existantes de l'interface utilisateur dudit terminal, tel que un ou plusieurs boutons sur un clavier dudit terminal, un ou plusieurs menus déroulants, une ou plusieurs commandes vocales, une ou plusieurs commandes en braille, un ou plusieurs liens hypertext situés sur un écran dudit terminal ou tout autre équipement réalisant une sélection.

Conformément à l'invention, ledit moyen de sélection est associé à au moins un dispositif de commande dudit moyen de sélection.

Ledit moyen de sélection dudit terminal peut être activé par un dispositif de commande, tel que un ou plusieurs détecteurs de température, un ou plusieurs détecteurs de pression ou tout autre équipement réalisant une commande.

L'invention a également pour objet un procédé de sélection dans un terminal pour un ensemble de dispositifs d'architectures dédiées à des réseaux de communication, ledit terminal incluant au moins une interface utilisateur et étant connecté simultanément à plusieurs desdits réseaux de communication, la connexion auxdits réseaux de communication étant établie par l'intermédiaire de liens appelés "PDP Context" via un réseau mobile vers lesdits réseaux de communication, remarquable en ce que ledit procédé comporte les étapes consistant à : - intégrer au moins un moyen de sélection à ladite interface utilisateur dudit terminal ; - activer ledit moyen de sélection dudit terminal pour commander par ledit, moyen de sélection au moins un accès à au moins un gestionnaire d'architectures dédiées intégré audit terminal pour choisir un nom identifiant un desdits réseaux de communication, et pour gérer au moins un état d'au moins un dispositif d'architecture dédiée à un audit réseau de communication selectionné ; commander par l'intermédiaire dudit gestionnaire d'architectures dédiées au moins un premier moyen de transmission vers ledit dispositif d'architecture dédiée dudit terminal ; - commander par l'intermédiaire dudit gestionnaire d'architectures dédiées au moins un deuxième moyen de transmission vers ledit réseau de communication sélectionné ; - traiter par l'intermédiaire dudit gestionnaire d'architectures dédiées au moins un état dudit lien appelé "PDP Context" vers ledit réseau de communication sélectionné ; - accéder par ledit gestionnaire d'architectures dédiées à au moins une ressource dudit terminal accessible par ledit dispositif d'architecture dédiée et adaptée audit réseau de communication sélectionné.

Ledit gestionnaire d'architectures dédiées attribue une architecture dédiée à chacun desdits réseaux de communication, ce qui offre la possibilité de réaliser des gestions différentes et indépendantes, dans le même temps.

Le moyen de sélection permet de solliciter ledit gestionnaire d'architectures dédiées du terminal. Ledit gestionnaire d'architectures dédiées commande alors l'accès et les fonctions de chacune des architectures dédiées grâce à au moins un premier moyen de transmission, ainsi que de chacun des réseaux de communication grâce à au moins un deuxième moyen de transmission, ainsi que de chacun des liens PDP Context correspondant, ainsi que de chacune des ressources dudit terminal.

Selon la sélection réalisée, ledit gestionnaire d'architectures dédiées gère, en cours d'utilisation, l'une ou l'autre des architectures dédiées, l'un ou l'autre des réseaux de communication, l'un ou l'autre des liens PDP Context correspondant audit réseau de communication, l'une ou l'autre des ressources dudit terminal.

Le gestionnaire d'architectures dédiées est prévu pour gérer au moins un dispositif d'architecture dédiée à un réseau de communication et pour traiter simultanément le fonctionnement desdites architectures dédiées dudit terminal connecté avec plusieurs desdits réseaux de communication.

Du fait du fonctionnement distinct et autonome des différentes architectures dédiées, le fonctionnement dudit terminal peut être adapté selon le réseau de communication avec lequel il est connecté. Par exemple, des fonctionnalités peuvent être prises en copte avec l'un des réseaux de communication et ne pas exister avec un autre réseau de communication.

De plus, du fait de l'augmentation du nombre de services accessibles par des réseaux de communication, l'autonomie de chaque architecture dédiée permet notamment d'affecter des ressources spécifiques, par exemple des applications spécifiques ou bien un espace mémoire différent ou bien des qualités de service différentes d'un réseau de communication à l'autre.

La description qui va suivre en regard du dessin annexé, donné à titre d'exemple non limitatif, fera bien comprendre en quoi consiste l'invention et comment elle peut être réalisée.

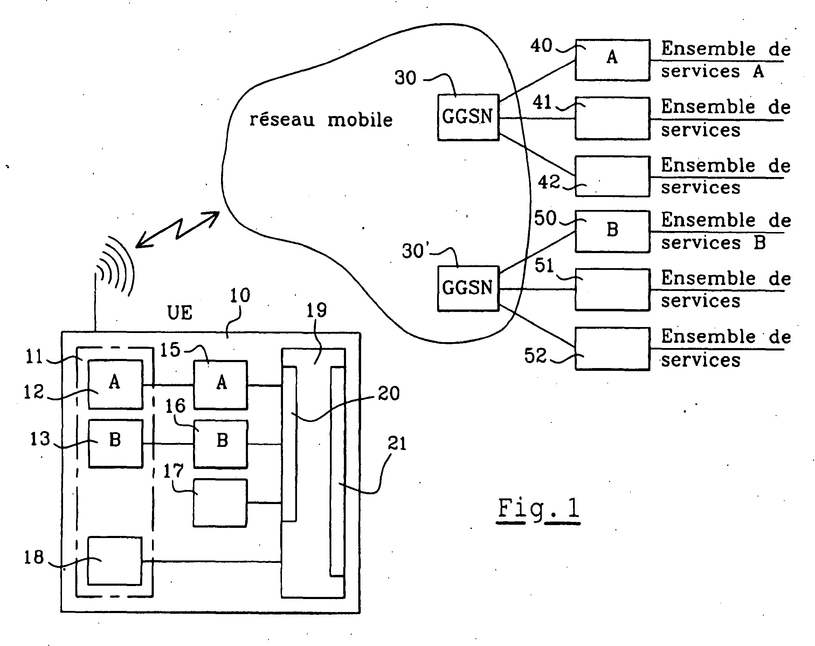

La figure 1 est un schéma de l'architecture générale du système de sélection dans un terminal pour une architecture dédiée à un réseau de communication, conforme à l'invention.

Pour faciliter la compréhension, l'invention est décrite avec les appellations utilisées dans la terminologie des systèmes UMTS. Toutefois, l'invention s'applique à tous les systèmes de communication utilisant des techniques identiques d'identification d'un réseau de communication.

De même, pour simplifier la description, l'abonné au réseau de télécommunications mobiles est indiqué comme un terminal 10, mais il peut être de différentes natures, par exemple un serveur ou bien un terminal de communication mobile, un ordinateur personnel de type PC (Personnal Computer) ou bien un poste de télévision, et par un équipement d'abonné 10 appelé UE (User Equipment) sur la figure 1.

Quel que soit le terminal 10 utilisé, celui-ci est relié à un réseau mobile public auquel l'utilisateur est abonné.

Actuellement, lorsque l'utilisateur du terminal 10 souhaite accéder à un réseau 40, 41, 42, 50, 51, 52 de communication, il transmet, par l'intermédiaire d'une borne radio du réseau mobile, un nom APN identifiant ledit réseau 40, 41, 42, 50, 51, 52 de communication, offrant un ensemble de services auxquels ledit terminal 10 souhaite accéder.

Pour ce faire, ledit utilisateur accède, par exemple, par l'interface utilisateur 11 dans ledit gestionnaire d'architectures dédiées 19 à au moins une liste des noms APN identifiant lesdits réseaux 40, 41, 42, 50, 51, 52 de communication, auxquels ledit utilisateur est abonné et auxquels il peut accéder. La norme de l'ETSI prévoyant que plusieurs connexions peuvent être établies simultanément vers différents réseaux de communication à partir d'un même terminal, entre autre chose, ladite liste des noms APN permet le fonctionnement dudit terminal comme un terminal dit "multi-APN".

Dans ledit réseau mobile, un équipement de gestion d'accès radio appelé "SGSN" reçoit ledit nom APN en provenance dudit terminal 10. Ledit équipement appelé "SGSN" recherche quel équipement de gestion d'accès, appelé "GGSN", gère ledit nom identifiant APN.

L'équipement appelé "SGSN" transmet le nom identifiant APN à un serveur de nom APN auquel il est raccordé, qui possède une table de correspondance entre les noms APN et les équipements de gestion d'accès appelés "GGSN". Ledit équipement appelé "SGSN" sélectionne un équipement 30, 30' de gestion d'accès appelé "GGSN", qui gère ledit nom APN.

Ledit équipement 30, 30' appelé "GGSN" établit la connexion vers ledit réseau 40, 41, 42, 50, 51, 52 de communication. Un lien appelé "PDP Context" est établi à travers le réseau mobile vers ledit réseau 40, 41, 42, 50, 51, 52 de communication. Ce lien "PDP Context" permet l'accès du terminal 10 audit réseau 40, 41, 42, 50, 51, 52 de communication.

Ledit équipement 30, 30' appelé "GGSN" transmet ensuite une adresse vers le terminal 10, qui identifie ledit terminal 10 pour ledit réseau 40, 41, 42, 50, 51, 52 de communication connecté.

Dans ledit terminal 10, le gestionnaire d'architectures dédiées 19 reçoit ladite adresse. Ledit gestionnaire d'architectures dédiées 19 affecte une architecture dédiée 15, 16, 17 audit réseau 40, 41, 42, 50, 51, 52 de communication connecté et transmet l'adresse à ladite architecture dédiée 15, 16, 17 affectée audit réseau 40, 41, 42, 50, 51, 52 de communication connecté.

Ladite architecture dédiée 15, 16, 17 est associée audit lien appelé "PDP Context", qui permet l'accès dudit terminal 10 audit réseau 40, 41, 42, 50, 51, 52 de communication.

Les étapes de la connexion, ci-dessus mentionnées, se renouvellent à chaque fois que l'utilisateur dudit terminal 10 souhaite accéder à un nouveau réseau de communication 40, 41, 42, 50, 51, 52.

Une nouvelle connexion est établie entre ledit terminal 10 et un nouveau réseau 40, 41, 42, 50, 51, 52 de communication. Par conséquent, un nouveau lien appelé "PDP Context" est établi à travers ledit réseau mobile vers le nouveau réseau 40, 41, 42, 50, 51, 52 de communication.

Dans ledit terminal 10, ledit gestionnaire d'architectures dédiées 19 reçoit une nouvelle adresse. II affecte une nouvelle architecture dédiée 15, 16, 17 audit nouveau réseau 40, 41, 42, 50, 51, 52 de communication connecté. Dès lors, ladite nouvelle architecture dédiée 15, 16, 17 est associée audit nouveau lien appelé "PDP Context", qui permet l'accès dudit terminal 10 audit nouveau réseau 40, 41, 42, 50, 51, 52 de communication.

A chaque connexion établie et à chaque affectation d'une architecture dédiée 15, 16, 17 à un réseau 40, 41, 42, 50, 51, 52 de communication, ledit gestionnaire d'architectures dédiées 19 mémorise dans au moins une liste des architectures dédiées 15, 16, 17, gérée par ledit gestionnaire d'architectures dédiées 19 dudit terminal 10, l'identifiant de ladite architecture dédiée 15, 16, 17 utilisée dans ledit terminal 10. La norme de l'ETSI prévoyant que plusieurs connexions peuvent être établies simultanément vers différents réseaux de communication à partir d'un même terminal, entre autre chose, ladite liste des architectures dédiées permet le fonctionnement dudit terminal comme un terminal dit "multi-APN".

Une fois la connexion établie, l'architecture dédiée accède à l'interface utilisateur 11 dudit terminal 10. De cette façon, l'abonné accède à au moins un contenu de service dudit réseau 40, 41, 42, 50, 51, 52 de communication, par exemple une page d'accueil 12, 13.

Dans le cas où l'affichage du contenu sur ledit terminal 10 ne serait pas requis par le réseau de communication, la représentation du contenu dudit réseau de communication peut être réalisée par tout autre moyen de l'interface utilisateur 11 dudit terminal 10, tel qu'un message vocal transmis par un moyen d'écoute sonore.

L'interface utilisateur 11 dudit terminal 10, par exemple un moyen d'affichage ou un moyen d'écoute sonore ou un moyen de transmission d'un signal vocal ou bien un moyen de lecture en braille, permet l'accès aux services correspondant aux différents réseaux 40, 41, 42, 50, 51, 52 de communication.

Quel que soit le nombre de connexions établies, chaque architecture dédiée 15, 16, 17 à un réseau 40, 41, 42, 50, 51, 52 de communication reçoit les informations en provenance dudit réseau 40, 41, 42, 50, 51, 52 de communication par l'intermédiaire de chaque lien "PDP Context" correspondant au dit réseau 40, 41, 42, 50, 51, 52 de communication.

Pour permettre la gestion de ces différentes connexions, ledit terminal 10 est équipé d'au moins un moyen 18 de sélection, intégré dans ladite interface utilisateur 11.

Ledit moyen 18 de sélection est de toute forme et de toute nature s'adaptant aux technologies existantes de l'interface utilisateur 11 dudit terminal 10. Ledit moyen 18 de sélection peut être composé d'un ou plusieurs boutons sur un ou plusieurs claviers dudit terminal ; d'un ou plusieurs menus déroulants sur au moins un moyen d'affichage ; d'un ou plusieurs liens hypertext situés sur ledit moyen d'affichage et sélectionnés grâce à un curseur par exemple par une souris ou sur un écran tactile ou par pontage par l'oeil ; d'une ou plusieurs commandes vocales émises par l'abonné dudit terminal ; d'une ou plusieurs commandes en braille ; ou bien de tout autre équipement réalisant une sélection.

L'utilisateur du terminal 10 active ledit moyen 18 de sélection dudit terminal 10.

Ledit moyen 18 de sélection peut également être associé à au moins un dispositif de commande dudit moyen 18 de sélection. Dans ce cas, ledit dispositif de commande active ledit moyen 18 de sélection dudit terminal 10.

Ledit dispositif de commande est par exemple un détecteur de température ou de pression ou bien un détecteur à induction ou bien tout autre dispositif de détection ou autre mesure, permettant d'activer ledit moyen 18 de sélection par exemple en fonction de la valeur ou d'un seuil de la température ou de la pression mesurée par ledit dispositif de commande.

Ledit moyen 18 de sélection est soit général soit spécifique à une fonction de gestion dudit gestionnaire d'architectures dédiées 19.

Si le moyen 18 de sélection est dit "général", il donne accès à un choix parmi les différentes fonctions de gestion dudit gestionnaire d'architectures dédiées 19, par exemple grâce à un menu écrit ou vocal listant lesdites fonctions de gestion.

Sinon le terminal 10 peut comporter plusieurs moyens 18 de sélection dit "spécifiques" correspondant chacun à une des fonctions de gestion dudit gestionnaire d'architectures dédiées 19.

Entre autre tâche, ledit gestionnaire d'architectures dédiées 19 gère lesdites fonctions de gestion, soit en particulier la création, la modification, la suspension, la fermeture d'au moins une architecture dédiée 15, 16, 17 ou bien toute autre fonction de gestion utile pour une architecture dédiée 15, 16, 17 ou bien la consultation des données caractéristiques d'une architecture dédiée 15, 16, 17, telles que par exemple les ressources utilisées dans ledit terminal 10.

Dans ledit gestionnaire d'architectures dédiées 19, ladite fonction de gestion est activée par ledit moyen 18 de sélection ou bien par le choix réalisé par exemple grâce à une liste des fonctions de gestion dudit gestionnaire d'architectures dédiées 19.

Selon l'activation réalisée, ledit gestionnaire d'architectures dédiées 19 commande au moins un premier moyen 20 de transmission vers au moins une architecture dédiée 15, 16, 17 à un réseau 40, 41, 42, 50, 51, 52 de communication. Ledit premier moyen 20 de transmission est intégré audit gestionnaire d'architectures dédiées 19.

Suivant la fonction de gestion sélectionnée, ledit gestionnaire d'architectures dédiées 19 commande par exemple la création, la modification, la suspension ou la fermeture des transmissions vers ladite architecture dédiée 15, 16, 17 à un réseau 40, 41, 42, 50, 51, 52 de communication.

Selon l'activation réalisée, ledit gestionnaire d'architectures dédiées 19 commande au moins un deuxième moyen 21 de transmission vers au moins un réseau 40, 41, 42, 50, 51, 52 de communication. Ledit deuxième moyen 21 de transmission est également intégré audit gestionnaire d'architectures dédiées 19.

Suivant la fonction de gestion sélectionnée, ledit gestionnaire d'architectures dédiées 19 commande par exemple la création, la modification, la suspension ou la fermeture des transmissions vers ledit réseau 40, 41, 42, 50, 51, 52 de communication.

Selon l'activation réalisée, ledit gestionnaire d'architectures dédiées 19 gère au moins un état d'au moins un lien appelé "PDP Context" vers ledit réseau 40, 41, 42, 50, 51, 52 de communication.

Suivant la fonction, de gestion sélectionnée, ledit gestionnaire d'architectures dédiées 19 commande par exemple la création, la modification, la suspension ou la fermeture dudit lien PDP Context entre ledit terminal 10 et ledit réseau 40, 41, 42, 50, 51, 52 de communication, à travers le réseau mobile.

Selon l'activation réalisée, ledit gestionnaire d'architectures dédiées 19 permet l'accès à au moins une ressource dudit terminal 10 accessible par ladite architecture dédiée 15, 16, 17 à un réseau 40, 41, 42, 50, 51, 52 de communication.

Suivant la fonction de gestion sélectionnée, ledit gestionnaire d'architectures dédiées 19 commande par exemple l'accès à un emplacement de mémoire dudit terminal 10 ou bien l'accès à une fonctionnalité de l'unité centrale (ou CPU, soit Central Processing Unit) dudit terminal 10, pour le fonctionnement de ladite architecture dédiée 15, 16, 17 à un réseau 40, 41, 42, 50, 51, 52 de communication.

Par conséquent, selon l'activation d'une des fonctions de gestion, la commande est différente à partir dudit gestionnaire d'architectures dédiées 19 soit vers ledit premier moyen 20 de transmission vers au moins une architecture dédiée 15, 16, 17 à un réseau 40, 41, 42, 50, 51, 52 de communication, soit vers ledit deuxième moyen 21 de transmission vers au moins un réseau 40, 41, 42, 50, 51, 52 de communication, soit vers ledit lien PDP Context entre ledit terminal 10 et ledit réseau 40, 41, 42, 50, 51, 52 de communication, soit vers ladite ressource dudit terminal 10.

Selon la sélection réalisée, ledit gestionnaire d'architectures dédiées gère l'une ou l'autre des architectures dédiées, l'un ou l'autre des réseaux de communication, l'un ou l'autre des liens PDP Context correspondant audit réseau de communication, l'une ou l'autre des ressources dudit terminal, tout ceci en cours d'utilisation et en parallèle avec l'accès par ledit terminal 10 aux services fournis par lesdits réseaux 40, 41, 42, 50, 51, 52 de communication.

En particulier, lorsque l'utilisateur dudit terminal 10 souhaite accéder à un réseau 40, 41, 42, 50, 51, 52 de communication, ledit utilisateur accède dans ledit gestionnaire d'architectures dédiées 19 à ladite liste des noms APN identifiant lesdits réseaux 40, 41, 42, 50, 51, 52 de communication, auxquels ledit utilisateur est abonné et auxquels il peut accéder.

Après sélection par ledit utilisateur d'un nom APN dans ladite liste, la fonction de création dudit gestionnaire d'architectures dédiées 19, par l'intermédiaire dudit premier moyen 20 de transmission, a pour objet d'attribuer une architecture dédiée 15, 16, 17, gérée par ledit gestionnaire d'architectures dédiées 19 dudit terminal 10, audit nom APN sélectionné, identifiant un desdits réseaux 40, 41, 42, 50, 51, 52 de communication, associée à un lien PDP Context correspondant.

Ladite création dans ledit gestionnaire d'architectures dédiées 19, par l'intermédiaire dudit deuxième moyen 21 de transmission, permet la commande de la procédure d'activation d'un lien PDP Context, normalisée par l'ETSI (European Télécommunications Standards Institute, soit Institut européen de normalisation des télécommunications) sous le nom de "PDP Context activation procedure", qui conduit à la création d'un accès vers ledit réseau 40, 41, 42, 50, 51, 52 de communication identifié par ledit nom APN sélectionné sur ledit terminal 10.

Ledit gestionnaire d'architectures dédiées 19 dudit terminal 10 commande l'accès à au moins une ressource dudit terminal 10 utilisée par l'architecture dédiée 15, 16, 17 audit réseau 40, 41, 42, 50, 51, 52 de communication, telle que l'accès à un emplacement de mémoire dudit terminal 10 ou bien l'accès à une fonctionnalité de l'unité centrale (ou CPU) dudit terminal 10, pour le fonctionnement de ladite architecture dédiée 15, 16, 17 audit réseau 40, 41, 42, 50, 51, 52 de communication.

De la même manière, une fois au moins une connexion établie entre ledit terminal 10 et au moins un desdits réseaux 40, 41, 42, 50, 51, 52 de communication, la fonction de modification dudit gestionnaire d'architectures dédiées 19 a pour objet de modifier les ressources utilisées dans ledit terminal 10 par l'architecture dédiée 15, 16, 17 audit réseau 40, 41, 42, 50, 51, 52 de communication connecté, associée audit lien PDP Context correspondant.

Ladite modification permet d'adapter les ressources dudit terminal 10, par exemple lors d'un changement de qualité de service vers ledit réseau 40, 41, 42, 50, 51, 52 de communication en modifiant la capacité des mémoires affectées sur ledit terminal 10.

Ladite modification dans ledit gestionnaire d'architectures dédiées 19, par l'intermédiaire desdits premier et deuxième moyens 20, 21 de transmission, permet la commande de la procédure de modification d'un lien PDP Context, normalisée par l'ETSI sous le nom de "PDP Context modification procedure", qui comprend la modification des caractéristiques de transmission vers ledit réseau 40, 41, 42, 50, 51, 52 de communication connecté.

De façon identique, une fois au moins une connexion établie entre ledit terminal 10 et au moins un desdits réseaux 40, 41, 42, 50, 51, 52 de communication, la fonction de suspension dudit gestionnaire d'architectures dédiées 19 a pour objet de suspendre temporairement les transmissions entre ledit gestionnaire d'architectures dédiées 19 et ladite architecture dédiée 15, 16, 17 audit réseau 40, 41, 42, 50, 51, 52 de communication connecté, associée audit lien PDP Context correspondant.

De ce fait, ladite architecture dédiée 15, 16, 17 ne peut plus accéder audit réseau 40, 41, 42, 50, 51, 52 de communication connecté, donc ne peut plus réaliser aucune fonction, ni aucune modification, ni intervention d'aucune sorte, telle que l'affectation d'une ressource de mémoire dudit terminal 10 ou bien la modification de la qualité de service de la transmission.

Ladite suspension dans ledit gestionnaire d'architectures dédiées 19, par l'intermédiaire desdits premier et deuxième moyens 20, 21 de transmission, permet la commande de la procédure de suspension des transmissions, normalisée par l'ETSI sous le nom de "suspend procedure", qui conduit à l'arrêt temporaire des transmissions vers ledit réseau 40, 41, 42, 50, 51, 52 de communication connecté.

L'arrêt d'une suspension conduit à la reprise des transmissions normales, au moment et en l'état où elles ont été suspendues. Dans ledit gestionnaire d'architectures dédiées 19, l'arrêt de ladite suspension permet la commande de la procédure de reprise des transmissions, normalisée par l'ETSI sous le nom de "resume procedure", qui conduit à la reprise des transmissions vers ledit réseau 40, 41, 42, 50, 51, 52 de communication connecté.

De la même manière, une fois au moins une connexion établie entre ledit terminal 10 et au moins un desdits réseaux 40, 41, 42, 50, 51, 52 de communication, la fonction de fermeture dudit gestionnaire d'architectures dédiées 19 a pour objet de clôturer toutes les transmissions entre ledit gestionnaire d'architectures dédiées 19 et ladite architecture dédiée 15, 16, 17 audit réseau 40, 41, 42, 50, 51, 52 de communication connecté, associée audit lien PDP Context correspondant.

Ladite fermeture dans ledit gestionnaire d'architectures dédiées 19, par l'intermédiaire desdits premier et deuxième moyens 20, 21 de transmission, permet la commande de la procédure de fermeture d'un lien PDP Context, normalisée par l'ETSI sous le nom de "PDP Context deactivation procedure", qui conduit à l'arrêt de toutes les transmissions vers ledit réseau 40, 41, 42, 50, 51, 52 de communication connecté audit terminal 10.

Ledit gestionnaire d'architectures dédiées 19 dudit terminal 10 commande la fermeture de ladite architecture dédiée 15, 16, 17 audit réseau 40, 41, 42, 50, 51, 52 de communication connecté, ce qui libère toutes les ressources utilisées dans ledit terminal 10 par ladite architecture dédiée 15, 16, 17, par exemple tous les emplacements de mémoire dudit terminal 10 ou bien l'accès à l'unité centrale (ou CPU) dudit terminal pour ladite architecture dédiée 15, 16, 17. Si existants, les fichiers, téléchargés et mémorisés dans une mémoire non volatile dudit terminal 10, ne sont pas affectés par ladite fonction de fermeture et la libération des autres ressources dudit terminal 10.

A l'issue de ladite fonction de fermeture, l'identifiant de ladite architecture dédiée 15, 16, 17 clôturée est supprimée de ladite liste des architectures dédiées 15, 16, 17 gérée par ledit gestionnaire d'architectures dédiées 19 dudit terminal 10.

## Revendications

1. Système de sélection dans un terminal (10) pour un ensemble de dispositifs d'architectures dédiées (15, 16, 17) à des réseaux (40, 41, 42, 50, 51, 52) de communication, ledit terminal (10) incluant au moins une interface utilisateur (11) et étant connecté simultanément à plusieurs desdits réseaux (40, 41, 42, 50, 51, 52) de communication, **caractérisé en ce que,** la connexion auxdits réseaux (40, 41, 42, 50, 51, 52) de communication étant établie par l'intermédiaire de liens appelés "PDP Context" via un réseau mobile vers lesdits réseaux (40, 41, 42, 50, 51, 52) de communication, ledit système comprend au moins un moyen (18) de sélection, intégré dans ladite interface utilisateur (11) dudit terminal (10), permettant de commander au moins un accès à au moins un gestionnaire d'architectures dédiées (19), intégré audit terminal (10) pour faire le choix du nom identifiant un desdits réseaux (40, 41, 42, 50, 51, 52) de communication et pour gérer un desdits dispositifs d'architecture dédiée (15, 16, 17) audit réseau (40, 41, 42, 50, 51, 52) de communication sélectionné et permettant de raccorder ledit gestionnaire d'architectures dédiées (19) audit lien appelé "PDP Context" pour traiter au moins un état dudit lien vers ledit réseau (40, 41, 42, 50, 51, 52) de communication sélectionné et adapter au moins une ressource au dit réseau (40, 41, 42, 50, 51, 52) de communication sélectionné.

2. Système de sélection dans un terminal (10) pour un ensemble de dispositifs d'architectures dédiées (15, 16, 17) selon la revendication 1, **caractérisé en ce que,** suivant la fonction de gestion sélectionnée par ledit moyen (18) de sélection, ledit gestionnaire d'architectures dédiées (19) comprend des moyens pour commander, séparément ou en combinaison, la création, la modification, la suspension, la fermeture d'au moins un dispositif d'architecture dédiée.

3. Système de sélection dans un terminal (10) pour un ensemble de dispositifs d'architectures dédiées (15, 16, 17) selon l'une des revendications 1 ou 2, **caractérisé en ce que** ledit gestionnaire d'architectures dédiées (19) gère l'ensemble des dispositifs d'architectures dédiées (15, 16, 17), lesdits dispositifs ne possédant pas les fonctionnalités permettant la gestion des liens PDP Context pour maintenir une indépendance entre les différents réseaux de communication.

4. Système de sélection dans un terminal (10) pour un ensemble de dispositifs d'architectures dédiées (15, 16, 17) selon l'une quelconque des revendications 1 à 3, **caractérisé en ce que** ledit moyen (18) de sélection est associé à au moins un dispositif de commande dudit moyen de sélection.

5. Système de sélection dans un terminal (10) pour un ensemble de dispositifs d'architectures dédiées (15, 16, 17) selon l'une quelconque des revendications 1 à 4, **caractérisé en ce que,** en fonction dudit moyen (18) de sélection, ledit gestionnaire d'architectures dédiées (19) est raccordé à au moins un premier moyen (20) de transmission permettant de gérer au moins une transmission avec au moins un dispositif d'architecture dédiée (15, 16, 17) dudit terminal (10).

6. Système de sélection dans un terminal (10) pour un ensemble de dispositifs d'architectures dédiées (15, 16, 17) selon l'une quelconque des revendications 1 à 5, **caractérisé en ce que,** en fonction dudit moyen (18) de sélection, ledit gestionnaire d'architectures dédiées (19) est raccordé à au moins un deuxième moyen (21) de transmission permettant de gérer au moins une transmission avec ledit réseau (40, 41, 42, 50, 51, 52) de communication sélectionné.

7. Système de sélection dans un terminal (10) pour un ensemble de dispositifs d'architectures, dédiées (15, 16, 17) selon l'une quelconque des revendications 1 à 6, **caractérisé en ce que,** en fonction dudit moyen (18) de sélection, ledit gestionnaire d'architectures dédiées (19) est raccordé à au moins une ressource dudit terminal (10) accessible par au moins un dispositif d'architecture dédiée (15, 16, 17).

8. Terminal (10) **caractérisé en ce qu'**il comprend au moins ledit système de sélection conforme à l'une quelconque des revendications 1 à 7.

9. Procédé de sélection dans un terminal (10) pour un ensemble de dispositifs d'architectures dédiées (15, 16, 17) à des réseaux (40, 41, 42, 50, 51, 52) de communication, ledit terminal (10) incluant au moins une interface utilisateur (11) et étant connecté simultanément à plusieurs desdits réseaux (40, 41, 42, 50, 51, 52) de communication, **caractérisé en ce que,** la connexion auxdits réseaux (40, 41, 42, 50, 51, 52) de communication étant établie par l'intermédiaire de liens appelés "PDP Context" via un réseau mobile vers lesdits réseaux (40, 41, 42, 50, 51, 52) de communication, ledit procédé comporte les étapes consistant à :
- intégrer au moins un moyen (18) de sélection à ladite interface utilisateur (11) dudit terminal (10),
- activer ledit moyen (18) de sélection dudit terminal (10) pour commander au moins un accès à au moins un gestionnaire d'architectures dédiées (19) intégré audit terminal (10) pour choisir un nom identifiant un desdits réseaux (40, 41, 42, 50, 51, 52) de communication et pour gérer au moins un état d'au moins un dispositif d'architecture dédiée (15, 16, 17) audit réseau de communication sélectionné,
- commander par l'intermédiaire dudit gestionnaire d'architectures dédiées (19) au moins un premier moyen (20) de transmission vers ledit dispositif d'architecture dédiée (15, 16, 17) dudit terminal (10),
- commander par l'intermédiaire dudit gestionnaire d'architectures dédiées (19) au moins un deuxième moyen (21) de transmission vers ledit réseau (40, 41, 42, 50, 51, 52) de communication sélectionné,
- traiter par l'intermédiaire dudit gestionnaire d'architectures dédiées (19) au moins un état dudit lien appelé "PDP Context" vers ledit réseau (40, 41, 42, 50, 51, 52) de communication sélectionné,
- accéder par l'intermédiaire dudit gestionnaire d'architectures dédiées (19) à au moins une ressource dudit terminal (10) accessible par ledit dispositif d'architecture dédiée (15, 16, 17) et adaptée au dit réseau (40, 41, 42, 50, 51, 52) de communication sélectionné.

## Claims

1. A system for making a selection from a set of architectures (15, 16, 17) dedicated to communications networks (40, 41, 42, 50, 51, 52) in a terminal (10) that includes a user interface (11) and is adapted to be connected simultaneously to a plurality of said communications networks (40, 41, 42, 50, 51, 52), which system is **characterized in that,** the connections to the communications networks (40, 41, 42, 50, 51, 52) being set up via a mobile network by means of PDP context links to said communications networks (40, 41, 42, 50, 51, 52), the system comprises selection means (18) integrated into the user interface (11) of the terminal (10) for controlling at least an access to a dedicated architecture manager (19) integrated into the terminal (10) for selecting the identification name of one of the communications networks (40, 41, 42, 50, 51, 52) and for managing one of the set of the architectures (15, 16, 17) dedicated to the selected communications network (40, 41, 42, 50, 51, 52), and for connecting the dedicated architecture manager (19) to the PDP context link to the selected communications network (40, 41, 42, 50, 51, 52) in order to process a state of said link and to adapt a resource to the selected communications network (40, 41, 42, 50, 51, 52).

2. A system according to claim 1, **characterized in that** the dedicated architecture manager (19) includes means for controlling, separately or in combination, creation, modification, suspension and closure of a dedicated architecture, according to the management function selected by the selection means (18).

3. A system according to either claim 1 or claim 2, **characterized in that** the dedicated architecture manager (19) manages the set of the dedicated architectures (15, 16, 17), which, in order to maintain the independence of the various communications networks, have no functions for managing PDP context links.

4. A system according to any one of claims 1 to 3, **characterized in that** the selection means (18) are associated with a selection means control device.

5. A system according to any one of claims 1 to 4, **characterized in that,** as a function of the selection means (18), the dedicated architecture manager (19) is connected to a first transmission means (20) for managing at least a transmission with at least a dedicated architecture (15, 16, 17) of the terminal (10).

6. A system according to any one of claims 1 to 5, **characterized in that,** as a function of the selection means (18), the dedicated architecture manager (19) is connected to second transmission means (21) for managing at least a transmission to the selected communications network (40, 41, 42, 50, 51, 52).

7. A system according to any one of claims 1 to 6, **characterized in that,** as a function of the selection means (18), the dedicated architecture manager (19) is connected to at least a resource of the terminal (10) accessible by at least a dedicated architecture (15, 16, 17).

8. Terminal (10) **characterized in that** it includes at least selection means (18) according to any one of claims 1 to 7.

9. A method of making a selection in a terminal (10) from a set of architectures (15, 16, 17) dedicated to communications networks (40, 41, 42, 50, 51, 52), said terminal (10) including a user interface (11) and being adapted to be connected simultaneously to a plurality of said communications networks (40, 41, 42, 50, 51, 52), which method is **characterized in that,** the connections to the communications networks (40, 41, 42, 50, 51, 52) being set up via a mobile network by means of PDP context links to the communications networks (40, 41, 42, 50, 51, 52), the method comprises the steps of:
- integrating selection means (18) with the user interface (11) of the terminal (10);
- activating the selection means (18) of the terminal (10) to control access to a dedicated architecture manager (19) integrated into the terminal (10) to select an identification name of one of the communications networks (40, 41, 42, 50, 51, 52) and to manage at least a state of one architecture (15, 16, 17) dedicated to the selected communications network (40, 41, 42, 50, 51, 52);
- the dedicated architecture manager (19) controlling first means (20) of transmission to the dedicated architecture (15, 16, 17) of the terminal (10);
- the dedicated architecture manager (19) controlling second means (21) of transmission to the selected communications network (40, 41, 42, 50, 51, 52);
- the dedicated architecture manager (19) processing a state of the PDP context link to the selected communications network (40, 41, 42, 50, 51, 52); and
- the dedicated architecture manager (19) accessing a resource of the terminal (10) accessible by the dedicated architecture (15, 16, 17) and adapted to the selected communications network (40, 41, 42, 50, 51, 52).

## Patentansprüche

1. Auswahlsystem in einem Endgerät (10) für eine Gruppe von Vorrichtungen für Kommunikationsnetze (40, 41, 42, 50, 51, 52) dedizierter Architekturen (15, 16, 17), wobei das Endgerät (10) mindestens eine Benutzerschnittstelle (11) enthält und gleichzeitig mit mehreren der Kommunikationsnetze (40, 41, 42, 50, 51, 52) verbunden ist, **dadurch gekennzeichnet, dass,** bei einem Aufbau der Verbindung mit den Kommunikationsnetzen (40, 41, 42, 50, 51, 52) mittels "PDP Context" genannten Links über ein Mobilnetz zu den Kommunikationsnetzen (40, 41, 42, 50, 51, 52), das System mindestens eine in die Benutzerschnittstelle (11) des Endgeräts (10) integrierte Auswahleinrichtung (18) aufweist, die es ermöglicht, mindestens einen Zugang zu mindestens einem Verwalter dedizierter Architekturen (19) zu steuern, der in das Endgerät (10) integriert ist, um die Wahl des Namens zu treffen, der eines der Kommunikationsnetze (40, 41, 42, 50, 51, 52) identifiziert, und um eine der Vorrichtungen mit für das ausgewählte Kommunikationsnetz (40, 41, 42, 50, 51, 52) dedizierter Architektur (15, 16, 17) zu verwalten, und es ermöglicht, den Verwalter dedizierter Architekturen (19) mit dem "PDP Context" genannten Link zu verbinden, um mindestens einen Zustand des Links zum ausgewählten Kommunikationsnetz (40, 41, 42, 50, 51, 52) zu verarbeiten und mindestens eine Ressource an das ausgewählte Kommunikationsnetz (40, 41, 42, 50, 51, 52) anzupassen.

2. Auswahlsystem in einem Endgerät (10) für eine Gruppe von Vorrichtungen dedizierter Architekturen (15, 16, 17) nach Anspruch 1, **dadurch gekennzeichnet, dass,** je nach der von der Auswahleinrichtung (18) ausgewählten Verwaltungsfunktion, der Verwalter dedizierter Architekturen (19) Einrichtungen aufweist, um getrennt oder kombiniert die Erzeugung, die Veränderung, die Verarbeitungspause, das Schließen mindestens einer dedizierten Architekturvorrichtung zu steuern.

3. Auswahlsystem in einem Endgerät (10) für eine Gruppe von Vorrichtungen dedizierter Architekturen (15, 16, 17) nach einem der Ansprüche 1 oder 2, **dadurch gekennzeichnet, dass** der Verwalter dedizierter Architekturen (19) die Gruppe der Vorrichtungen dedizierter Architekturen (15, 16, 17) verwaltet, wobei die Vorrichtungen nicht die Funktionalitäten besitzen, die die Verwaltung der Links PDP Context erlauben, um eine Unabhängigkeit zwischen den verschiedenen Kommunikationsnetzen aufrechtzuerhalten.

4. Auswahlsystem in einem Endgerät (10) für eine Gruppe von Vorrichtungen dedizierter Architekturen (15, 16, 17) nach einem der Ansprüche 1 bis 3, **dadurch gekennzeichnet, dass** die Auswahleinrichtung (18) mindestens einer Steuervorrichtung der Auswahleinrichtung zugeordnet ist.

5. Auswahlsystem in einem Endgerät (10) für eine Einheit von Vorrichtungen dedizierter Architekturen (15, 16, 17) nach einem der Ansprüche 1 bis 4, **dadurch gekennzeichnet, dass** in Abhängigkeit von der Auswahleinrichtung (18) der Verwalter dedizierter Architekturen (19) mit mindestens einer ersten Übertragungseinrichtung (20) verbunden ist, die es ermöglicht, mindestens eine Übertragung mit mindestens einer Vorrichtung dedizierter Architektur (15, 16, 17) des Endgeräts (10) zu verwalten.

6. Auswahlsystem in einem Endgerät (10) für eine Gruppe von Vorrichtungen dedizierter Architekturen (15, 16, 17) nach einem der Ansprüche 1 bis 5, **dadurch gekennzeichnet, dass,** in Abhängigkeit von der Auswahleinrichtung (18), der Verwalter dedizierter Architekturen (19) mit mindestens einer zweiten Übertragungseinrichtung (21) verbunden ist, die es ermöglicht, mindestens eine Übertragung mit dem ausgewählten Kommunikationsnetz (40, 41, 42, 50, 51, 52) zu verwalten.

7. Auswahlsystem in einem Endgerät (10) für eine Gruppe von Vorrichtungen dedizierter Architekturen (15, 16, 17) nach einem der Ansprüche 1 bis 6, **dadurch gekennzeichnet, dass,** in Abhängigkeit von der Auswahleinrichtung (18), der Verwalter dedizierter Architekturen (19) mit mindestens einer Ressource des Endgeräts (10) verbunden ist, die für mindestens eine Vorrichtung dedizierter Architektur (15, 16, 17) zugänglich ist.

8. Endgerät (10), **dadurch gekennzeichnet, dass** es mindestens die Auswahleinrichtung (18) nach einem der Ansprüche 1 bis 7 aufweist.

9. Auswahlverfahren in einem Endgerät (10) für eine Gruppe von Vorrichtungen für Kommunikationsnetze (40, 41, 42, 50, 51, 52) dedizierter Architekturen (15, 16, 17), wobei das Endgerät (10) mindestens eine Benutzerschnittstelle (11) enthält und gleichzeitig mit mehreren der Kommunikationsnetze (40, 41, 42, 50, 51, 52) verbunden ist, **dadurch gekennzeichnet, dass** bei einem Aufbau der Verbindung mit den Kommunikationsnetzen (40, 41, 42, 50, 51, 52) mittels "PDP Context" genannten Links über ein Mobilnetz zu den Kommunikationsnetzen (40, 41, 42, 50, 51, 52) das Verfahren Schritte aufweist, die darin bestehen:
- mindestens eine Auswahleinrichtung (18) in die Benutzerschnittstelle (11) des Endgeräts (10) zu integrieren,
- die Auswahleinrichtung (18) des Endgeräts (10) zu aktivieren, um mindestens einen Zugang zu mindestens einem Verwalter dedizierter Architekturen (19) zu steuern, der in das Endgerät (10) integriert ist, um einen Namen auszuwählen, der eines der Kommunikationsnetze (40, 41, 42, 50, 51, 52) identifiziert, und um mindestens einen Zustand mindestens einer Vorrichtung einer für das ausgewählte Kommunikationsnetz dedizierten Architektur (15, 16, 17) zu verwalten,
- über den Verwalter dedizierter Architekturen (19) mindestens eine erste Einrichtung (20) zur Übertragung zur Vorrichtung dedizierter Architektur (15, 16, 17) des Endgeräts (10) zu steuern,
- über den Verwalter dedizierter Architekturen (19) mindestens eine zweite Einrichtung (21) zur Übertragung zum ausgewählten Kommunikationsnetz (40, 41, 42, 50, 51, 52) zu steuern,
- über den Verwalter dedizierter Architekturen (19) mindestens einen Zustand des "PDP Context" genannten Links zum ausgewählten Kommunikationsnetz (40, 41, 42, 50, 51, 52) zu verarbeiten,
- über den Verwalter dedizierter Architekturen (19) auf mindestens eine Ressource des Endgeräts (10) zuzugreifen, die für die Vorrichtung dedizierter Architektur (15, 16, 17) zugänglich und für das ausgewählte Kommunikationsnetz (40, 41, 42, 50, 51, 52) geeignet ist.
